# EUROPEAN PATENT APPLICATION

(11) **EP 2 725 834 A1**
(43) Date of publication of application: **30.04.2014**
(21) Application number: 12190457.7
(22) Date of filing: 29.10.2012
(51) Int. Cl.: H04W 12/06, H04W 84/18, H04W 88/06, H04W 8/26

(54) **Method for providing a device ID of a short distance communication device to an authentication process, computer programme at short distance communication receiver**

(71) Applicant: Houti, Souffiane, Dubai (AE)
(72) Inventor: Houti, Souffiane, Dubai (AE)
(74) Representative: Schwabe - Sandmair - Marx

(57) **Abstract**

The invention is directed to a method for providing a device ID of a short distance communication device to an authentication process, comprising the steps of:
a) receiving, at a receiving module, the device ID of the short distance communication device,
b) determining, at the receiving module, whether or not the device ID of the short distance communication device shall be provided to the authentication process and
c) providing the device ID to the authentication process if the device ID of the short distance communication device shall be provided to the authentication process.

## Description

The present invention relates to a method for providing a device ID of short distance communication device to an authentication process, a computer program for making a computer execute the method and a short distance communication receiver on which the program is running.

Short distance communication devices, in particular mobile devices, belonging to a user have increasingly been proposed and used recently for systems such as customer loyalty systems, couponing, raffle draws, micro payment systems, gift card systems and so on. The short distance communication device, such as a mobile phone, a smart phone, a Bluetooth device and so on, is used for transmitting a required information in a contact-less manner and can replace known approaches, such as reading a chip or a magnet stripe of a card using a appropriate reader. The information typically is a unique ID, such as the ID of a card, which is associated with a user, an account or so on. When a short distance communication device is used, then the information typically is the device ID which is associated with a user, an account or so on. This means that the device ID of the short distance communication device is determined and provided to an authentication process, which for example authenticates (or identifies) the user, an account and so on.

In systems using a short distance communication device with a unique device ID and a receiving module which receives the device ID of the short distance communication device and provides the device ID to an authentication process, a problem is to distinguish whether a communication device is intentionally brought within a communication range of a receiving module in order to provide its device ID or resides within the communication range unintentionally. In addition, if a plurality of short distance communication devices is located within a communication range of the receiving module, it has to be distinguished which of the communication devices is to be identified. The present invention provides a solution to both issues.

The present invention generally relates to a method for providing a device ID of a short distance communication device to an authentication process, comprising the steps of receiving, at a receiving module, the device ID of the short distance communication device; determining, at the receiving module, whether or not the device ID of the short distance communication device shall be provided to the authentication process and providing the device ID to the authentication process if the device ID of the short distance communication device shall be provided to the authentication process. The receiving module can be stationary or implemented in a mobile device such as a telephone, also referred to as mobile phone or smart phone or a portable computer such as a tablet computer. The receiving module can for example be part of a POS (point of sales) terminal, of a system for access control or for checking in at a shop/coffee shop/hospital/hospitality environment etc. or of a system for registering/accessing/paying food for example at conference/exhibition.

In a first general embodiment of the present invention, a near field communication (NFC) tag is used to determine whether or not the device ID of the short distance communication device shall be provided to the authentication process. The method according to this first general embodiment comprises the steps of determining whether or not a near field communication tag provided at a receiving module is within near field communication range of the short distance communication device; receiving, at the receiving module, the device ID of the short distance communication device from the short distance communication device if the short distance communication device is within near field communication range of the receiving module; and providing the device ID to the authentication process. With this approach, only a device ID of a short range communication device within a very short distance defined by the near field communication range, which is typically less than 5 centimeters, from the NFC tag is provided to the authentication process. The NFC tag being at the receiving module preferably means that it is a part of the receiving module or separate from the receiving module, but in the latter case preferably within Bluetooth communication range of the receiving module, such that the short distance communication device is also within Bluetooth communication range of the receiving module if it is within NFC communication range of the NFC tag.

Preferably, the short range communication device is a Bluetooth device, the device ID is the Bluetooth MAC (Media Access Control) address of the Bluetooth device and the Bluetooth MAC address of the Bluetooth device is transmitted during a Bluetooth Secure Simple Pairing (SSP) using NFC process. This process is standardized by the NFC Forum and the Bluetooth Special Interest Group and is available from Bluetooth v2.1 onwards. In this document, NFC is used only as an example for an out-of-band (OOB) technology used in Bluetooth SSP. Any other suitable OOB technology can be applied instead of NFC.

In Bluetooth SSP using NFC, the NFC tag near or in the receiving module sends a data record comprising the MAC address of the receiving module and the SSP application code. The Bluetooth device, which is NFC enabled, receives the MAC address of the receiving module in the data record and uses this MAC address for the further stages of the pairing process, which are performed using Bluetooth radio transmission. The Bluetooth device sends a pairing request comprising the device ID of the Bluetooth device. Preferably, the NFC tag is within Bluetooth communication range between the receiving module and the Bluetooth device, which is NFC enabled, or the Short Distance Communication Device equipped with both Bluetooth and NFC. In one embodiment, the receiving module cancels the pairing process after it has received the MAC address of the Bluetooth device.

In a second general embodiment of the present invention, a change in the signal strength of the signal from the short distance communication device received by the receiving module is used to determine whether or not the device ID of the short distance communication device shall be provided to the authentication process. The method according to this second general embodiment comprises the steps of receiving, at the receiving module, the device ID of the short distance communication device. The communication device may transmit its device ID according to rules or protocols of the short distance communication system used. The device ID might be sent in a general broadcast initiated by the short distance communication device or after an enquiry of the receiving module to transmit the device ID.

The method further comprises the step of determining, at the receiving module, a variation of the signal strength received from the short distance communication device. In other words, the receiving module analyzes the received signal strength of the signal transmitted by the short distance communication device. In an embodiment, the receiving module records a course of the received signal strength over time. Preferably, the received signal is the signal with which a short distance communication device transmits its device ID. Preferably, the short distance communication device transmits its device ID repeatedly.

The method further comprises comparing the determined variation of the signal strength with a predefined signal strength pattern. The method further comprises the step of providing a device ID to the authentication process if the determined variation of a signal strength matches the signal strength pattern. By performing the last two steps, it is achieved that only the device ID sent by a short distance communication device which generates the predefined signal strength pattern at the receiving module is provided to the authentication process. Any other short distance communication devices within the communication range of the receiving module, which do not cause the predefined signal strength pattern at the receiving module, are ignored. The authentication process can be performed in the receiving module or any device which receives the device ID from the receiving module.

Preferably, in both general embodiments, the short distance communication uses a suitable technology, such as Bluetooth, infrared transmission, near field communication, RFID or WiFi. Bluetooth is a proprietary open wireless technology standard managed by the Bluetooth Special Interest group. The Bluetooth standard comprises a plurality of versions including a low-energy feature which was formerly known as Wibree. In infrared transmission, an information signal is modulated onto an infrared light, for example generated by an infrared LED. Near field communication (NFC) encompasses standards for mobile devices such as smartphones for establishing radio communication over a short distance, such as less than 10 cm, or by bringing two near field communication devices into contact. The short distance communication device may carry an unpowered chip, also referred to as tag. Radio-frequency identifcation (RFID) also uses a tag to provide the ID of the tag in a contact-less manner. WiFi is a standard for forming a wireless local area network and is defined by the WiFi Alliance.

The signal strength to be determined at the receiving module can be determined using any suitable approach for the implemented kind of short distance communication. Preferably, the received signal strength indication (RSSI) metric, which represents the power present in a received radio signal, is used. However, if the link quality of the short distance communication is determined, the link quality value may be used as an indicator of the signal strength.

Within this document, the term "device ID" means any information that uniquely identifies a short distance communication device. This comprises, for example, a unique ID, such a number or a string, associated to a device, a MAC address or any other suitable information. The short distance communication device preferably is a mobile device.

Preferably, the variation of the signal strength determined at the receiving module is caused by an intentional movement of the short distance communication device. This intentional movement preferably follows a predefined movement pattern, such as a waving pattern in which the short distance communication device is waved, for example once, back and forth or even more often, or a tapping movement in which the device is moved towards the receiving module, for example until it is in contact with a defined surface of the receiving module. This intentional movement causes a corresponding variation of the received signal strength, such that a particular movement causes a particular variation. The particular variation, and thus the particular movement pattern, can be identified by comparison of the variation of the received signal strength with the predefined signal strength pattern.

The signal strength pattern may represent a single change, that is drop or rise, of the signal strength within a defined period of time. The change might be 20% to 30% of the signal strength. The period of time might be 0.25 seconds, 0.5 seconds or 1 second.

In one embodiment, the signal strength pattern represents a repeated drop of the signal strength from a maximum signal strength range to a reduced signal strength range, each drop followed by a rise back to a maximum signal strength range. The first drop or the last rise might not occur depending on the movement. In particular, the repeated drops (and following rises) of the signal strength are periodic. Periodic drops and rises are, for example, caused by waving the short distance communication device relative to the receiving module, or, more precisely, an antenna connected to or being part of the receiving module.

However, the signal strength pattern may represent any kind of change of the received signal strength over time, in which case the pattern might be represented by a graph over time.

In one embodiment, a maximum signal strength range ranges from 90% to 100% of the maximum signal strength. The maximum signal strength is the highest received signal strength during the observed period of time. Preferably, the reduced signal strength range ranges from 70% to 80% of the maximum signal strength. With those two ranges, a tolerance range is defined for the amplitudes of the drops and rises of the predefined signal strength pattern. In analogy, a temporal tolerance range can be defined for a period with which the signal strength drops and rises. This means that the periods of consecutive drops and/or rises of the signal strength might vary within a predetermined margin.

Preferably, at least the steps of receiving the device ID, determining the variation of the signal strength and comparing the determined variation with a predefined signal strength pattern are performed before a pairing process of the short distance communication device with the receiving module is performed. Many short distance communication technologies, such as Bluetooth, comprise a pairing step in which two devices exchange a key for a subsequent data exchange. The method according to the present invention can be performed before the pairing process is initiated, and even completely without any subsequent pairing process. The method according to the present invention can for example provide a device ID of a Bluetooth device to an authentication process without performing any pairing between the receiving module and the Bluetooth device.

The method steps of determining the variation of the received signal strength and of comparing the determined variation with a predefined signal strength pattern can be understood as a proximity detection. With this understanding, the short distance communication device and the receiving module are considered as being in proximity if a short distance communication device generates, at the receiving module, a variation of the received signal strength corresponding to a predefined signal strength pattern. The term "proximity" thus does not only mean a spatial distance, but further encompasses a particular variation of the received signal strength, for example corresponding to a particular movement of the short distance communication device.

It shall be noted that a certain tolerance might be acceptable when determining whether or not a determined variation of the received signal strength matches the signal strength pattern and/or the repeated drops and rises of the signal strength are periodic.

The present invention further relates to a program which, when running on a computer or when loaded onto a computer, causes a computer to perform a method step of the method described herein and/or to a program storage medium which a program is stored, in particular in non-transitory form. In particular, the program either makes the computer perform a method step or makes the computer command another device or process to perform a method step. The program can also be referred to as application. The computer can be any suitable computing device, such as a mobile telephone or a tablet computer, for example running under the Android operating system.

Within the framework of the invention, computer program elements can be embodied by hardware and/or software (this also includes firmware, resident software, micro-code, etc.). Within the framework of the invention, computer program elements can take the form of a computer program product which can be embodied by a computer-usable or computer-readable storage medium comprising computer-usable or computer-readable program instructions, "code" or a "computer program" embodied in said medium for use on or in connection with the instruction-executing system. Such a system can be a computer; a computer can be a data processing device comprising means for executing the computer program elements and/or the program in accordance with the invention. Within the framework of this invention, a computer-usable or computer-readable medium can be any medium which can include, store, communicate, propagate or transport the program for use on or in connection with the instruction-executing system, apparatus or device. The computer- usable or computer-readable medium can for example be, but is not limited to, an electronic, magnetic, optical, electromagnetic, infrared or semiconductor system, apparatus or device or a medium of propagation such as for example the Internet. The computer-usable or computer-readable medium could even for example be paper or another suitable medium onto which the program is printed, since the program could be electronically captured, for example by optically scanning the paper or other suitable medium, and then compiled, interpreted or otherwise processed in a suitable manner. The computer program product and any software and/or hardware described here form the various means for performing the functions of the invention in the example embodiments. The computer and/or data processing device can in particular include a guidance information device which includes means for outputting guidance information. The guidance information can be outputted, for example to a user, visually by a visual indicating means (for example, a monitor and/or a lamp) and/or acoustically by an acoustic indicating means (for example, a loudspeaker and/or a digital speech output device) and/or tactilely by a tactile indicating means (for example, a vibrating element or vibration element incorporated into an instrument).

The present invention further relates to a short distance communication receiver for a short distance communication system, the receiver comprising a receiving module comprising a central processing unit on which the aforementioned program is running. Preferably, the short distance receiver further comprises an antenna with a known directivity pattern. Compared to an antenna with an omni-directional pattern, a directivity pattern having at least one maximum causes a stronger variation of the received signal strength caused by a movement of the short distance communication device relative to the antenna. Preferably, the variation of the signal strength is caused by an intentional movement of the short distance communication device in a plane orthogonal to the direction of a maximum of the antenna directivity pattern. This results in a clear variation of the received signal strength.

It lies within the scope of the present invention to combine embodiments or one or more features of a plurality of embodiments in order to form a new embodiment as long as technically feasible. In particular, it is possible to at least partly combine the two general embodiments. With such a combination, short range communication devices within short distance from the receiving module can be identified using the first general embodiment. If there is a plurality of short range communication devices within short distance of the receiving module, the device the ID of which is to be provided to the authentication process can be determined using the signal strength of the second general embodiment. On the other hand, the second general embodiment can be used in order to determine short range communication devices that generate a predefined signal strength pattern at the receiving module. If there is a plurality of such devices, the device the ID of which is to be provided to the authentication process can be determined using the proximity criteria of the first general embodiment

It is further possible to implement each general embodiment separately without the other general embodiment. This means that the features of any one or more of claims 3 to 5, or other features of the first general embodiment, can form an embodiment of its own right in combination with the features of claim 1 without any features which characterize the second general embodiment.

The invention shall be explained in more detail with reference to the accompanying figures, which show:
- Figure 1: a schematic diagram of a short distance communication system,
- Figure 2: a diagram illustrating the method according to the present invention,
- Figure 3: an antenna directivity pattern,
- Figure 4: a first graph showing a variation of the received signal strength,
- Figure 5: a second graph showing another variation of the received signal strength,
- Figure 6: a short distance receiver comprising an NFC receiver and
- Figure 7: a Bluetooth device with an NFC tag.

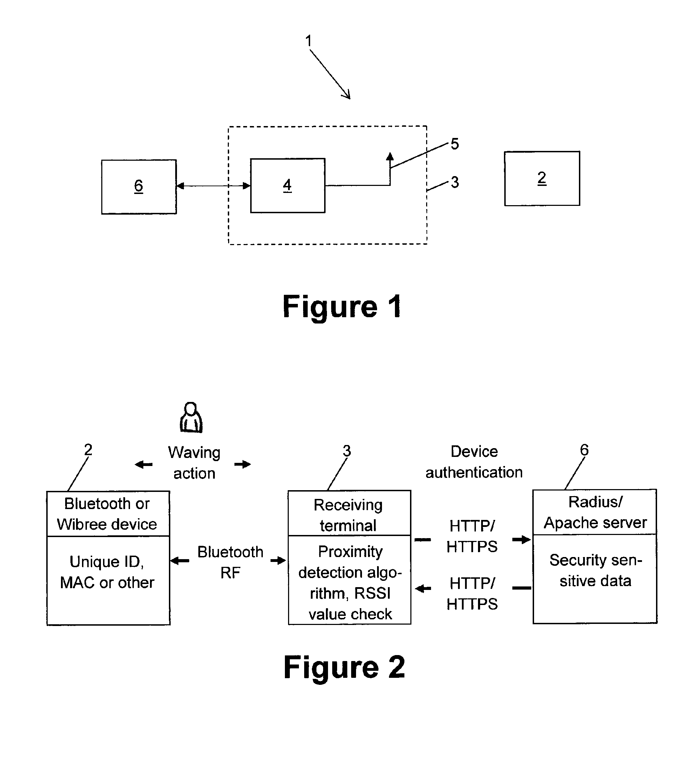

Figure 1 shows a schematic diagram of short distance communication system 1 comprising a short distance communication device 2, in the present example a Bluetooth device, and a short distance communication receiver 3, in a present example a Bluetooth receiver 3. A short distance communication device 2 can be any Bluetooth device, such as a mobile phone, a smart phone, an M2M unit, a Bluetooth watch, and so on. However, the short distance communication device 2 can be any other communication device implementing a short distance communication, such as a device carrying an NFC tag or an RFID tag. The short distance communication receiver is chosen correspondingly to the type of short distance communication device.

The Bluetooth receiver 3 comprises a receiving module 4 connected to an antenna 5. The receiving module 4 comprises a transceiver unit corresponding to the type of short distance communication, in a present example Bluetooth, a central processing unit and a memory (not shown). In the memory, a predefined signal strength pattern is stored. In addition, a variation of the signal received from the Bluetooth device 2 over time can be recorded in the memory. The Bluetooth receiver 3 can be a or a part of a stationary terminal, a smart phone or a tablet computer. The predefined signal strength pattern can be pre-stored, copied from a medium such as a memory card, downloaded via a network or created in the Bluetooth receiver 3. The signal strength pattern may be edited, for example when a new type of Bluetooth receiver 3 is to be used. The memory of the receiving module might be the memory of the Bluetooth receiver 3.

The Bluetooth receiver 3 is connected, via a network connection such as an Internet connection, to a Radius server 6 as an example for a backend system. Instead of a network connection to Radius server 6, the Bluetooth receiver 3 can be logically connected to any other authentication process. The Bluetooth device ID is sent from the receiving module 4 to the radius server 6 via an http/https connection. The radius server comprises an authentication module for authenticating a device ID, in particular for determining a user or an account from the device ID. The authenticated data is then returned to the receiving module 4, via http/https. The Bluetooth receiver 3 is not or does not need to be in discoverable mode.

In a first general embodiment, as shown in figure 2, a user performs a waving action of the Bluetooth device 2 relative to the antenna 5. The Bluetooth device 2 is in discoverable mode. The Bluetooth device 2 comprises a device ID, such as a unique ID, a MAC or any other suitable information, which is transmitted via the Bluetooth standard to the Bluetooth receiver 3, which preferably is in scan mode. The Bluetooth receiver 3 performs proximity detection by monitoring the strength and its change over time of the signal received from the Bluetooth device 2. A known RSSI value determination process is used for determining the signal strength, which is then stored in the memory of the receiving module 4. If the stored variation of the signal strength matches the stored signal strength pattern, then the device ID of the Bluetooth device 2 is provided to the Radius server 6. The predefined signal pattern may comprise a certain tolerance, or a certain tolerance might be allowable when the stored variation of the signal strength pattern is compared to the predefined signal strength pattern.

The device ID of the Bluetooth device 2 is either broadcast by the Bluetooth device 2, for example in the signal the strength of which is stored by the receiving module 4, or as requested from the Bluetooth device 2 by the receiving module 4 once a match between a variation of the received signal strength and the signal strength pattern was determined.

In a simple case, the predefined signal strength pattern represents a simple drop of the signal strength by a certain amount, such as 20 to 30%, within a predetermined period of time, such as 0.5 seconds or 1 second. However, the predefined signal strength pattern may also represent a rise of a certain amount, such as 20 to 30%, of the received signal strength in a defined period of time. In those two cases, a periodic check of the received signal strength is sufficient, and no continuous variation has to be stored.

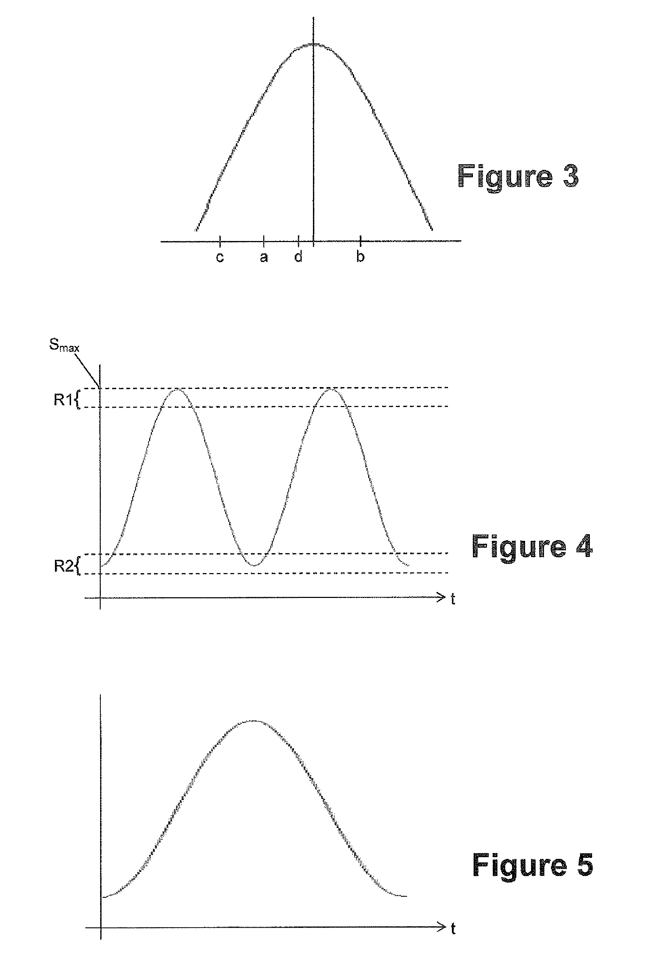

In order to further distinguish between an unintentional variation of the signal strength from a variation which indicates that the Bluetooth device 2 is to be identified, a more complex predefined signal strength pattern can be used. Such a pattern is described in combination with an antenna 5 having an antenna directivity pattern as shown in figure 3. In the graph of figure 3, the antenna sensitivity is drawn over the incident angle of the received signal. In this example, the antenna directivity pattern is mirror symmetric.

Figures 4 and 5 show variations of the received signal strength for two different movements of the Bluetooth device 2 relative to the antenna 5. The graph of figure 4 results from movement over the range a to b of angles, that is from a to b and back to a. This back-and-forth movement of the Bluetooth device 2 results in a variation which starts at a minimum, rises to a maximum, drops to a minimum, rises to another maximum and drops again to a minimum. The two maximums lie in a range R1 of signal strength between 90 and 100% of S_{MAX}, which is the maximum received signal strength. The three minimums all lie within the range R2, which lies between 70 and 80% of S_{MAX}.

In the graph of figure 5, the Bluetooth device 2 was moved over the range c to d of angles, that is from c to d and back to c. This movement of the Bluetooth device 2 causes a variation of the signal strength starting with a minimum, rising to a maximum and dropping again to a minimum.

The memory of the receiving module 4 comprises predefined signal strength patterns corresponding to the two recorded variations of the received signal strength. If a match has been found, then the ID of the Bluetooth device 2 is provided to the Radius server 6. It shall be noted that a certain tolerance between the determined variation of the signal strength and a predefined signal strength pattern is allowable.

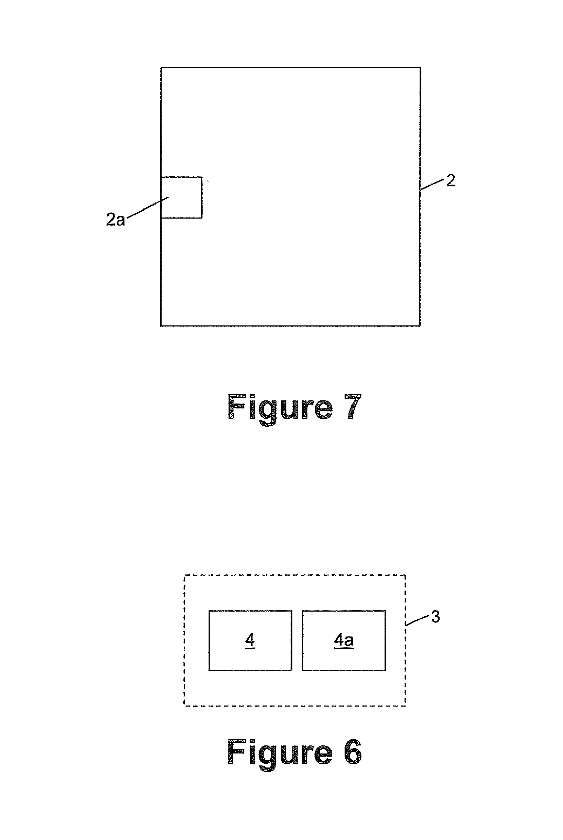

In a second general embodiment, the short distance receiver 3 comprises an out-of-band (OOB) tag 4a, such as an NFC tag, as shown in Figure 6. The OOB tag is configured to communicate wirelessly in a frequency band different from the Bluetooth frequency band. In this example, the NFC tag as an example of an OOB tag can communicate over a distance of up to a few centimetres. The NFC tag sends a data packet including the MAC address of the receiving module 4 as defined by Bluetooth Secure Simple Pairing using Near Field Communication. As shown in Figure 7, the Bluetooth device 2 further comprises an NFC receiver 2a for receiving the NFC data packet. Subsequent steps of the pairing process, including the transmission of the MAC address of the Bluetooth device 2 to the receiving module 4, will then be performed using Bluetooth radio transmission. The Bluetooth device 2 preferably uses the MAC address of the receiver 4 received with the NFC data packet for pairing.

If the Bluetooth device 2 receives the data packet, this implies that the Bluetooth device 2 is in close proximity or in "intended" Bluetooth range and is thus intended to be identified by the Radius server 6 or any other authentication process. This means that the Bluetooth device 2 transmits, and the receiving module 4 receives, the MAC address of the Bluetooth device 2 only if it is within NFC communication range of the NFC tag 4a. The receiving module 4 thus forwards the MAC address of the Bluetooth device 2 to the Radius server 6. Optionally, the receiving module 4 cancels the pairing process with the Bluetooth device 2 once it has received the MAC address from the Bluetooth device 2 and/or forwarded the MAC address to the Radius server 6.

In this document, the expression "receiver" also covers a transceiver, which has an additional transmitting capability.

## Claims

1. A method for providing a device ID of a short distance communication device (2) to an authentication process, comprising the steps of:
a) receiving, at a receiving module (4), the device ID of the short distance communication device (2),
b) determining, at the receiving module (4), whether or not the device ID of the short distance communication device (2) shall be provided to the authentication process and
c) providing the device ID to the authentication process if the device ID of the short distance communication device (2) shall be provided to the authentication process.

2. The method of claim 1, wherein determining whether or not the device ID of the short distance communication device (2) shall be provided to the authentication process comprises the steps of:
- determining a variation of the strength of the signal received from the short distance communication device (2),
- comparing the determined variation of the signal strength with a predefined signal strength pattern and
- determining that the device ID shall be provided to the authentication process if the determined variation of the signal strength matches the signal strength pattern.

3. The method of claim 2, wherein determining whether or not the device ID of the short distance communication device (2) shall be provided to the authentication process comprises the step of
determining whether or not a near field communication (NFC) tag (4a) provided at the receiving module (4) is within near field communication range of the short distance communication device (2), wherein it is determined that the device ID shall be provided to the authentication process if the NFC Tag (4a) is within near field communication range of the short distance communication device (2).

4. The method of claim 3, wherein it is determined that the near field communication tag (4a) provided at the receiving module (4) is within near field communication range of the short distance communication device (2) if the receiving module receives a pairing request comprising the device ID of the short distance communication device (2) from the short distance communication device (2).

5. The method of claim 3 or 4, wherein the short range communication device (2) is a Bluetooth device equipped with NFC, the device ID is the Bluetooth MAC address of the Bluetooth device (2) and the Bluetooth MAC address is transmitted during a Bluetooth Secure Simple Pairing Using NFC process.

6. The method of any one of claims 2 to 5, wherein the signal strength pattern comprises a drop of the signal strength from a maximum signal strength range to a reduced signal strength range or a rise of the signal strength from a reduced signal strength range to a maximum signal strength range.

7. The method of claim 6, wherein drops and rises of the signal strength are repeated, in particular periodically.

8. The method of claim 6 or 7, wherein the maximum signal strength range ranges from 90% to 100% of the maximum signal strength.

9. The method of any one of claims 6 to 8, wherein the reduced signal strength range ranges from 70% to 80% of the maximum signal strength.

10. The method of any one of claims 2 to 9, wherein the variation of the signal strength is caused by an intentional movement of the short distance communication device (2) according to a predefined movement pattern.

11. The method of any one of claims 1 to 10, wherein at least steps a) and b) are performed before a pairing process of the short distance communication device (2) with the receiving module (4) is performed.

12. A program which, when running on a computer (4) or when loaded onto a computer, causes the computer to perform the method steps of the method according to the preceding claims and/or to a program storage medium on which the program is stored.

13. A short distance communication receiver (3) for a short distance communication system (1), the receiver (3) comprising a receiving module (4) comprising a central processing unit on which the program according to claim 12 is running.

14. The short distance receiver (3) of claim 13, further comprising an antenna (5) with a known directivity pattern, wherein the variation of the signal strength is caused by an intentional movement of the short distance communication device (2) in a plane which is orthogonal to the direction of a maximum of the antenna directivity pattern.

15. The short distance receiver (3) of claim 13 or 14, wherein the short distance receiver (3) further comprises a near field communication receiver (4a) for determining whether or not the short distance communication device (2) is within near field communication range of the short distance receiver (3).
